(19)

Europäisches
Patentamt
European
Patent Office
Office européen
des brevets

(11) **EP 2 657 887 A1**

(12) **EUROPEAN PATENT APPLICATION**

(43) Date of publication:
**30.10.2013 Bulletin 2013/44**

(51) Int Cl.:
***G06K 9/62*** *(2006.01)*

(21) Application number: **12165590.6**

(22) Date of filing: **25.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Kendrick, David Michael
Winsford, Cheshire CW17 1BW (GB)**

(72) Inventor: **Kendrick, David Michael
Winsford, Cheshire CW17 1BW (GB)**

(74) Representative: **Fearnside, Andrew Simon
Appleyard Lees
15 Clare Road
Halifax, HX1 2HY (GB)**

(54) **Improvements in and relating to data comparison**

(57)     A system (method or apparatus) for comparison of two sets of data (e.g. image data or other), preferably for pattern recognition, in which elements in a set of data (A) under scrutiny are compared to elements in a set of reference data (B) to determine whether a match can be made between a given two individual elements being compared. The invention may include determining that a match does not exist if the number of non-matching elements exceeds a threshold value which may be set by a user.

Fig. 2

EP 2 657 887 A1

**Description**

The invention relates to apparatus and methods for data comparison between data sets, and particularly, though not exclusively, to pattern recognition apparatus and methods of pattern recognition implemented by machine.

Methods of data comparison and pattern recognition by computer are often computationally intensive. This places limits upon the effectiveness of pattern recognition software when limited computational resources are available to implement the software.

The present invention may address this problem.

At its most general, the invention is a system (method or apparatus) for comparison of two sets of data (e.g. image data or other), preferably for pattern recognition, in which elements in a set of data under scrutiny are compared to elements in a set of reference data to determine whether a match can be made between a given two individual elements being compared. The invention may include determining that a match does not exist if the number of non-matching elements exceeds a threshold value which may be set by a user. This allows the user to control the degree of accuracy between the two sets of data (e.g. an image under scrutiny and a reference image). In particular, if the user requires merely an approximate match to be detected then the threshold value may be set appropriately, whereas a more accurate match may be achieved by setting the threshold lower.

In a first of its aspects, the invention provides a machine-implemented method of comparing an input data set and a reference data set to determine a match between, the method comprising, comparing elements of the input data set to elements of the reference data set and determining according to said comparison the number (n) of distinguishing elements of the input data set which are not common to both the input data set and the reference data set, receiving a user-input value and generating a numerical reference value (q) therefrom, determining whether the number (n) of said distinguishing elements is less than the numerical reference value (q) and, if so - determining that a match exists between the input data set and the reference data set wherein the numerical reference value specifies an upper limit to a proportion of the number of elements of the input data set which need not be common to both the input data set and the reference data set and still result in the determination of a match.

Desirably, the comparing comprises comparing an element of the input data set to at least a corresponding element of the reference data set. The elements may be represented as numerical values (e.g. binary) . The corresponding element may correspond with the same position of an element in the input data set. The method may include comparing an element of the input data set to some or each element of the reference data set. It may be compared to each element of the reference data set, in turn. This comparing may comprise comparing an element of the input data asset only once with an element of the reference data set, thus avoiding double- counting.

Preferably, the numerical reference value is generated as a ratio of the user- input numerical value and the number of elements in the input data set expressed as a percentage proportion.

The reference data set and the input data set preferably contain the same number of elements.

The method may include generating the input data set as a sub-set of elements of a larger data set by selecting elements from the larger data set equal in number to the number of elements of the reference data set and determining a match between the sub-set of elements and the reference data set. Preferably, the method may include generating a plurality of distinct sub-sets and determining in turn a match between each sub-set of elements and the reference data set.

The number of distinguishing elements may be determined by determining the number (i) of common elements common to both the input data set and the reference data set and subtracting the number of common elements from the total number (t) of elements contained within the input data set.

The method may implement a method of pattern recognition. For example, the elements of the input data set may represent elements of an image and the elements of the reference data set may represent elements of a reference image to which the image is compared. Alternatively, or additionally, the elements of the input data set may represent elements of a text string and the elements of the reference data set may represent elements of a reference text string to which the text string is compared.

The invention may provide an apparatus arranged to implement the method described above.

In a second of its aspects, the invention provides an apparatus arranged to compare an input data set and a reference data set to determine a match therebetween, the apparatus comprising a comparator arranged to compare elements of the input data set to elements of the reference data set and to determine according to said comparison the number (n) of distinguishing elements of the input data set which are not common to both the input data set and the reference data set, a reference value generator arranged to receive a user-input value and to generate a numerical reference value (q) therefrom, a determiner arranged to  determine whether the number (n) of said distinguishing elements is less than the numerical reference value (q) generated by the reference value generator and, if so, to determine that a match exists between the input data set and the reference data set wherein the numerical reference value specifies an upper limit to a proportion of the number of elements of the input data set which need not be common to both the input data set and the reference data set and still result in the determination of a match.

The comparator is preferably arranged to compare an element of the input data set to at least a corresponding element of the reference data set. The elements may be represented as numerical values (e.g. binary). The corresponding element may correspond with the same position of an element in the input data set. The method may include comparing an element of the input data set to some or each element of the reference data set. It may be compared to each element of the reference data set, in turn. This comparing may comprise comparing an element of the input data set only once with an element of the reference data set, thus avoiding double-counting.

The numerical reference value may be generated as a ratio of the user-input numerical value and the number of elements in the input data set expressed as a percentage proportion.

The reference data set and the input data set preferably contain the same number of elements.

The comparator may be arranged to generate the input data set as a sub-set of elements of a larger data set by selecting elements from the larger data set equal in number to the number of elements of the reference data set and the determiner may be arranged to determine a match between the sub-set of elements and the reference data set. The comparator may be arranged to generate a plurality of distinct sub-sets and the determiner is arranged to determine in turn a match between each sub-set of elements and the reference data set.

Preferably, in this way a search may optionally be performed for a reference pattern (e.g. the reference set) within a larger image (e.g. pictures and/or text) . Partitioning of the larger input image into smaller images of the size of the reference image may be performed. These smaller images are preferably separate and non- overlapping image sub- blocks. An image may consist of an area of pixels each of which has a pixel value. The pixels typically occupy positions defined by coordinates (e.g., x and y) beginning from the top left of the image as viewed. The pixels may usually be arrayed as a matrix values. The present invention may reduce this into a simple set. The present invention may seek to find a match by parsing a subset through that simple set.

For example, consider an area the size of a VGA computer screen (640 by 480 pixels). In order to parse though the pixel values in the set of pixel values for this image, the subset of values may be a range of consecutive values in computer/storage memory locations [0 - 307199] (i.e. 640 * 480 locations). The invention may search though this set by parsing through the set one memory value at a time. The search may be conducted with an 8bit word length so as to compare 8 memory locations at a time. This allows for direct circuit mapping in binary logic which is not available for most other pattern matching systems.

The electronic term is for this process is "shifting", however the term "parsing" is used here synonymously as it is considered more apt. This would be readily understood by the person skilled in the art.

The comparator may be arranged to determine the number of distinguishing elements by determining the number (i) of common elements common to both the input data set and the reference data set and by subtracting the number of common elements from the total number (t) of elements contained within the input data set.

In a third aspect, the invention may provide a pattern recognition apparatus including the apparatus according to the apparatus described above in which the elements of the input data set represent elements of an image and the elements of the reference data set represent elements of a reference image to which the image is compared.

In a fourth aspect, the invention may provide a pattern recognition apparatus including the apparatus described above in which the elements of the input data set represent elements of a text string and the elements of the reference data set represent elements of a reference text string to which the text string is compared.

The invention may provide a computer-implemented method according to the method described above. The invention may provide a computer system for implementing the method described above. The invention in a further aspect may provide a computer program comprising program code embodied in at least one computer-readable medium, which when executed, enables a computer system to implement a described above.

There now follows a description of an embodiment of the invention as a non-limiting example to assist understanding, with reference to the accompanying drawings of which:

    Figure 1 illustrates a pattern recognition apparatus according to the invention.

    Figure 2 illustrates a flow chart of steps according to the invention;

    Figure 3 illustrates binary masks in an embodiment of the invention.

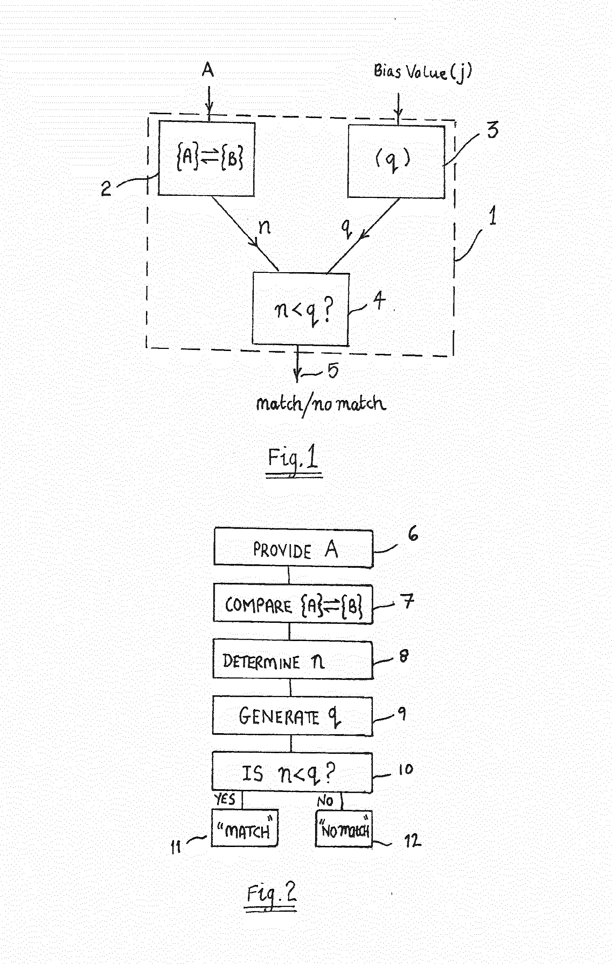

Figure 1 illustrates schematically a pattern recognition apparatus (1) arranged to implement a method to compare an input data set A of image pixel values and a reference data set B of image pixel values to determine a match between them.

The input data set A comprises the separate image pixel values which comprise, and composing, the initial image to be analysed. In initial image may optionally be decomposed into its constituent pixel values and these then ordered in an ordered set. The ordered set may be used as the input data set, and may be a range of values in consecutive computer/storage memory locations. The apparatus may comprise an image decomposer unit (not shown) arranged to perform that function, and to output a data set comprising image pixel values ordered (e.g. consecutively) in such a way that each element of the set (pixel value) may be individually accessed for comparison with an element(s) of the reference data set.

The initial image may simply be parsed in a raster-scan type fashion whereby pixel values (e.g. each value) of the image is accessed successively along some or all of a row or column of pixels, and along some or all successive rows and/or columns of pixels.

The initial image may be a bitmap image. A pixel value may be value from 0 (zero) to 255.

The apparatus comprises a comparator (2) arranged to compare elements {A} of the input data set A to elements {B} of the reference data set B and to determine according to the comparison the number (n) of distinguishing elements of the input data set which are not common to both the input data set and the reference data set.

The comparator may be arranged to compare an element of the input data set to a corresponding element of the reference data set. An element of the input data set (or of the reference data set) may have assigned to it both a number representing the pixel value of the pixel it represents and a coordinate representing the position of the pixel within the image it forms a part of. An element of the input data set then corresponds with an element of the reference data set if the pixel position of the former corresponds with the pixel position of the latter. Thus, pixel values may be compared by the comparator for selected or corresponding positions only.

Alternatively, where the input data set comprises the pixel values of the input image in their original relative positions within the frame of the input image (i.e. rows and columns) the comparator may be arranged to parse the input image in a raster- scan type fashion whereby individual pixel values (e.g. each value) of the image are compared successively along some or all of a row or column of pixels, and along some or all successive rows and/or columns of pixels. Each individual such pixel value of the input data set A is compared with each pixel value of the reference data set B for the purposes of determining a match. Once this comparison is completed in respect of the individual pixel {A} of the input image A, a successive individual pixel of the input image is then considered and compared with each pixel value {B} of the reference data set B for the purposes of determining a match. This comparison continues until all desired pixels of the input image A are separately compared with each element of the reference data set B. Accordingly, a given element of the input data set is only ever compared to a given element of the reference data set once. Double- counting is avoided.

To better illustrate this, consider a very simple example in which an input image data set A comprises one column of three pixels (A1, A2, A3). If the reference data set B comprises one column of three pixels (B1, B2, B3), then the following ordered comparisons are performed:

(1) Compare A1 to B1
(2) Compare A1 to B2
(3) Compare A1 to B3

(4) Compare A2 to B1
(5) Compare A2 to B2
(6) Compare A2 to B3

(7) Compare A3 to B1
(8) Compare A3 to B2
(9) Compare A3 to B3

Thus, nine comparisons are conducted in all and no double- counting occurs. Once an element of the input data set has been the subject of a completed comparison process concerning that element, it is not subsequently reconsidered during the remaining parts of the overall comparison process at hand for the input image.

Because the input and reference data sets are ordered and are compared sequentially, the whole of the input data set may be parsed though the reference data set.

The comparator may be arranged to implement a NAND logic operation. This may be implemented in software or hardware. An element {A} of the input data set A is compared to an element {B} of the reference data set B according to a logical NAND operation whereby a given pixel value of the input image is input as one input to a NAND gate (logical or physical) and a given pixel value of the reference image is concurrently input to another input of the NAND gate. If both of these concurrent inputs are deemed "high" by the NAND gate then the output of the NAND gate will be "low" which is deemed by the comparator (2) to indicate a match between the pixels. If either one or both input pixel values are deemed "low" by the NAND gate, its output is "high" indicating no match. An input may be deemed "high" if its value exceeds a predetermined threshold value. Thus, the two input values need not be exactly identical to result in a deemed match between these compared values, but need to be both deemed "high".

The comparator is arranged to determine the number of distinguishing elements by determining the number (i) of common elements common to both the input data set and the reference data set and by subtracting the number of common elements from the total number (t) of elements contained within the input data set.

A reference value generator (3) is arranged to receive a bias value (j) from a user via a user interface and to generate a numerical reference value (q) using the bias value. The reference value generator may simply generate the reference value by assigning that status to the received bias value, such that the reference value is identical to the bias value (i.e. q=j). Alternatively, the reference value generator may generate a new numerical value representing the reference value using the bias value. For example, the reference value may be generated according to the following equation:

$$q = \frac{j}{t} \times 100$$

where j is the user-input bias value and *t* is the number of elements contained in the input data set.

If q represents the maximum number of distinguishing elements the user will accept for a "match" to arise, then an alternative is to define the bias value (j) as a % representation of that. This would lead to the equation:

$$q = \frac{j}{100} \times t$$

Alternatively, the value of q could be input directly by a user.

In some embodiments, in order to generate a user bias value (j) and any reference value (q) for any number, the following a solution may be applied by the user.

P = a sought after threshold value (as a decimal percentage)

$$q = t^{(n-1)} - (P * t^{(n-1)})$$

$$j = (t^{(n-1)} / 100) / q$$

The number n is a label representing the generational number of the threshold value (t). Thus, the (n-1)th threshold value ($t^{(n-1)}$) previously used, is employed to generate the q and t values - it is not an exponent. This equation provides a simple and systematic way for a user to generate q and j, if desired. The numerical reference value may be generated as a ratio of the user-input numerical value and the number of elements in the input data set expressed as a percentage proportion.

A determiner (4) is arranged to receive the numerical reference value (q) from the reference value generator (3) and to receive the number (n) of distinguishing elements from the comparator (2). The determiner is arranged to determine whether the number (n) of distinguishing elements is less than the numerical reference value (q) generated by the reference value generator.

If the number (n) of distinguishing elements is less than the numerical reference value (q), then the determiner is arranged to determine that a match exists between the input data set and the reference data set. In this way, the numerical reference value specifies an upper limit to a proportion of the number of elements of the input data set which need not be common to both the input data set and the reference data set and still result in the determination of a match. The determiner is arranged to generate a signal or output result (5) indicating that a match exists in that case, and is arranged to generate a signal or output result indicating that no match exists otherwise.

Thus, if A represents the input data set of elements and B represents the reference data set of elements, each containing t elements of which n are distinguishing elements within A or B, then for a given numerical reference value (q), a match is determined to exist if:

$$n \leq q$$

Figure 2 illustrates the steps in the method of the invention, in a preferred embodiment, comprising, at step (6), providing a data set A to be scrutinised for a match with a reference data set B. Next, the method includes a step (7) of comparing elements {A} of the input data set to elements {B} of the reference data set and then determining (8) according to that comparison the number (n) of distinguishing elements of the input data set A which are not common to both the input data set and the reference data set. A user-input bias value (j) is then used at the next step (9) to generate a numerical reference value (q) therefrom. In the next step (10), it is determined whether the number (n) of distinguishing elements is less than the numerical reference value (q) and, if so at the next step (11) it is determined that a match exists between the input data set and the reference data set, otherwise it is determined (12) that no match exists. These final steps (10, 11) may include outputting the result on a display or as an output data signal.

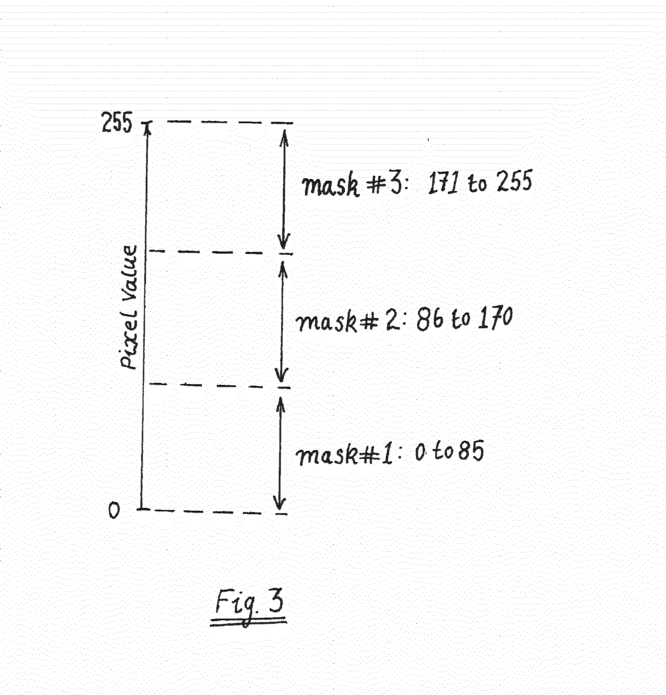

Figure 3 schematically illustrates several binary masks employed in preferred embodiments of the invention to implement variable degrees of accuracy (error tolerance) in the step (7, Fig.2) of comparing elements {A} of an input data set to elements {B} of the reference data set.

In particular, when an element {A} is compared to an element {B}, it is preferably their binary values that are compared. If it is not necessary to achieve a perfect match between binary values, such as when a given degree of error/mismatch is acceptable in practical terms, then a first binary mask may be employed in which the comparator (2, Fig.1) only compares a predetermined number of the more significant binary components of the two numbers being compared. For example, a first binary mask (mask#1) may be employed in which the first/lowest several bits in the binary numbers representing the two elements {A} and {B}, respectively, are ignored for the purposes of the comparison between them. Thus, if any numerical difference exists between the two elements, and that difference is expressed in binary terms only within the range of the ignored bits of the binary mask, then the comparator will conclude that a match exists between the elements {A} and {B} within the error tolerance of the mask#1.

For example, if the binary value if the element {A} is (10101011), and the binary value if the element {B} is (10101000), then is the binary mask is (111111xx) where an entry of"1" in the mask means that bits in that position are considered and an entry of "x" means that bits in that position are ignored, then the comparator will conclude that a match exists because the only difference between the binary values of {A} and {B} lies in the first two binary positions/ entries of each element which are masked- out by the binary mask (positions "x") and are ignored by the comparator. In particular the element {A} differs from the element {B} by a value 3 (three) represented by the binary difference (00000011) . Thus, the comparator may implement a practical comparison between elements of the data sets being compared, accounting for some differences between elements to an extent determined by the binary mask selected by the user.

Figure 3 shows three different binary masks may be used, for example. Mask #3 considers only the binary elements representative of pixel values in the range 171 to 225. This would produce quite a course comparison. Mask #2 combined with Mask #3 considers only the binary elements representative of pixel values in the range 86 to 225. This would produce quite a less course comparison. Mask #1, #2 and #3 combined considers all the binary elements representative of pixel values in the range 0 to 225. This would produce quite a very accurate comparison, but practically more difficult to implement since very similar elements would result in a "no match" result even if they differ by a small amount.

The embodiments described herein are not intended to be limiting, and are intended to be illustrative of examples of the invention. Modifications, equivalents and variants of the embodiments such as would be readily apparent to the skilled person are encompassed within the scope of the invention as defined by the claims.

**Claims**

1. A machine-implemented method of comparing an input data set and a reference data set to determine a match between, the method comprising:

   comparing elements of the input data set to elements of the reference data set and determining according to said comparison the number (n) of distinguishing elements of the input data set which are not common to both the input data set and the reference data set;
   receiving a user-input value and generating a numerical reference value (q) therefrom;
   determining whether the number (n) of said distinguishing elements is less than the numerical reference value (q) and, if so;
   determining that a match exists between the input data set and the reference data set wherein the numerical reference value specifies an upper limit to a proportion of the number of elements of the input data set which need not be common to both the input data set and the reference data set and still result in the determination of a match.

2. A machine-implemented method according to any preceding claim in which the comparing comprises comparing an element of the input data set to a corresponding element of the reference data set.

3. A machine-implemented method according to any preceding claim in which the numerical reference value is generated as a ratio of the user-input numerical value and the number of elements in the input data set expressed as a percentage proportion.

4. A machine-implemented method according to any preceding claim in which the reference data set and the input data set contain the same number of elements.

5. A machine-implemented method according to any preceding claim including generating the input data set as a sub-set of elements of a larger data set by selecting elements from the larger data set equal in number to the number of elements of the reference data set and determining a match between the sub-set of elements and the reference data set.

6. A machine-implemented method according to claim 5 including generating a plurality of distinct sub-sets and determining in turn a match between each sub-set of elements and the reference data set.

7. A machine-implemented method according to any preceding claim in which in which the number of distinguishing elements is determined by determining the number (i) of common elements common to both the input data set and the reference data set and subtracting the number of common elements from the total number (t) of elements contained within the input data set.

8. A method of pattern recognition including the machine-implemented method according to any preceding claim in which the elements of the input data set represent elements of an image and the elements of the reference data set represent elements of a reference image to which the image is compared.

9. A method of pattern recognition including the machine-implemented method according to any of claims 1 to 7 in which the elements of the input data set represent elements of a text string and the elements of the reference data set represent elements of a reference text string to which the text string is compared.

10. Apparatus arranged to compare an input data set and a reference data set to determine a match therebetween, the apparatus comprising:

a comparator arranged to compare elements of the input data set to elements of the reference data set and to determine according to said comparison the number (n) of distinguishing elements of the input data set which are not common to both the input data set and the reference data set;

a reference value generator arranged to receive a user-input value and to generate a numerical reference value (q) therefrom;

a determiner arranged to determine whether the number (n) of said distinguishing elements is less than the numerical reference value (q) generated by the reference value generator and, if so, to determine that a match exists between the input data set and the reference data set wherein the numerical reference value specifies an upper limit to a proportion of the number of elements of the input data set which need not be common to both the input data set and the reference data set and still result in the determination of a match.

11. Apparatus according to claim 10 in which the comparator is arranged to compare an element of the input data set to a corresponding element of the reference data set.

12. Apparatus according to any of claims 10 to 11 in which the numerical reference value is generated as a ratio of the user-input numerical value and the number of elements in the input data set expressed as a percentage proportion.

13. Apparatus according to any of claims 10 to 12 in which the reference data set and the input data set contain the same number of elements.

14. Apparatus according to any of claims 10 to 13 in which the comparator is arranged to generate the input data set as a sub-set of elements of a larger data set by selecting elements from the larger data set equal in number to the number of elements of the reference data set and the determiner is arranged to determine a match between the sub-set of elements and the reference data set.

15. Apparatus according to claim 14 in which the comparator is arranged to generate a plurality of distinct sub-sets and the determiner is arranged to determine in turn a match between each sub-set of elements and the reference data set.

16. Apparatus according to any of claims 10 to 14 in which in which the comparator is arranged to determine the number of distinguishing elements by determining the number (i) of common elements common to both the input data set and the reference data set and by subtracting the number of common elements from the total number (t) of elements contained within the input data set.

17. Pattern recognition apparatus including the apparatus according to any of claims 10 to 16 in which the elements of the input data set represent elements of an image and the elements of the reference data set represent elements of a reference image to which the image is compared.

18. Pattern recognition apparatus including the apparatus according to any of claims 10 to 17 in which the elements of the input data set represent elements of a text string and the elements of the reference data set represent elements of a reference text string to which the text string is compared.

19. A computer-implemented method according to the method of any of claims 1 to 9.

20. A computer system for implementing the method according to any of claims 1 to 9.

21. A computer program comprising program code embodied in at least one computer-readable medium, which when executed, enables a computer system to implement a method of any of claims 1 to 9

A                           Bias Value (j)

$\{A\} \rightleftharpoons \{B\}$          (q)          3

2                                     1

n          q

$n < q$?          4

5

match/no match

Fig. 1

PROVIDE A          6

COMPARE $\{A\} \rightleftharpoons \{B\}$          7

DETERMINE $n$          8

GENERATE $q$          9

IS $n < q$?          10

YES          No

"MATCH"          "No match"

11                              12

Fig. 2

255

Pixel Value

mask #3: 171 to 255

mask #2: 86 to 170

mask #1: 0 to 85

0

Fig. 3

Europäisches
Patentamt

European
Patent Office

Office européen
des brevets

# EUROPEAN SEARCH REPORT

**Application Number**

EP 12 16 5590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VANDERBRUG G J ET AL: "TWO-STAGE TEMPLATE MATCHING", IEEE TRANSACTIONS ON COMPUTERS, IEEE SERVICE CENTER, LOS ALAMITOS, CA, US, vol. C-26, no. 4, 1 April 1977 (1977-04-01), pages 384-393, XP008032034, ISSN: 0018-9340 * section I. Introduction - first paragraph section II. The Binary Case - introductory passages, eqs. 3 and 4 * ----- | 1-8, 10-17, 19-21 | INV. G06K9/62 |
| X | DAUGMAN J: "New Methods in Iris Recognition", IEEE TRANSACTIONS ON SYSTEMS, MAN AND CYBERNETICS. PART B:CYBERNETICS, IEEE SERVICE CENTER, PISCATAWAY, NJ, US, vol. 37, no. 5, 1 October 2007 (2007-10-01), pages 1167-1175, XP007904268, ISSN: 1083-4419, DOI: 10.1109/TSMCB.2007.903540 * Section V., eq. 13 Section Vi, last phrase * ----- | 1-8, 10-17, 19-21 | |
| X | Kimmo Fredriksson: "Rotation Invariant Template Matching" In: "Rotation Invariant Template Matching", 1 January 2001 (2001-01-01), University of Helsinki, Finland, XP55033139, * Section 1.1 Section 1.3, 2nd paragraph Section 2, pages 9-18 page 17, "Hamming distance" * ----- | 1-16 | |

**TECHNICAL FIELDS SEARCHED (IPC)**

G06K

-/--

The present search report has been drawn up for all claims

| Place of search | Date of completion of the search | Examiner |
|---|---|---|
| The Hague | 23 July 2012 | Alecu, Teodor Iulian |

## EUROPEAN SEARCH REPORT

Application Number

EP 12 16 5590

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMIHOOD AMIR ET AL: "Faster algorithms for string matching with k mismatches", JOURNAL OF ALGORITHMS, vol. 50, no. 2, 1 February 2004 (2004-02-01), pages 257-275, XP55033137, ISSN: 0196-6774, DOI: 10.1016/S0196-6774(03)00097-X * Abstract Sections I and II * | 1-7, 9-16, 18-21 | |
| A | JAIN A K: "Fundamentals of digital image processing,4.1.1-CONTRAST STRETCHING, 4.2.2-HISTOGRAM.PROCESSING", FUNDAMENTALS OF DIGITAL IMAGE PROCESSING, PRENTICE-HALL INTERNATIONAL, INC, US, 1 January 1989 (1989-01-01), pages 166-183, XP002407878, * page 171 - page 172; figures 4.8, 4.9 * | 1-16 | |

TECHNICAL FIELDS SEARCHED (IPC)

The present search report has been drawn up for all claims

| Place of search | Date of completion of the search | Examiner |
|---|---|---|
| The Hague | 23 July 2012 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)